(19) Europäisches Patentamt

European Patent Office

Office européen des brevets

(11) **EP 1 134 194 B1**

(12) **EUROPÄISCHE PATENTSCHRIFT**

(45) Veröffentlichungstag und Bekanntmachung des Hinweises auf die Patenterteilung:
**23.08.2006 Patentblatt 2006/34**

(51) Int Cl.:
***C02F 3/28*** *(2006.01)*

(21) Anmeldenummer: **01102620.0**

(22) Anmeldetag: **06.02.2001**

(54) **Verfahren zur Biomasse-Rückhaltung bei Bioreaktoren**

Process for retaining biomass in bioreactors

Procédé de retenue de biomasse pour les bioréacteurs

(84) Benannte Vertragsstaaten:
**AT BE CH CY DE DK ES FI FR GB GR IE IT LI LU MC NL PT SE TR**

(30) Priorität: **07.02.2000 DE 10005114**

(43) Veröffentlichungstag der Anmeldung:
**19.09.2001 Patentblatt 2001/38**

(73) Patentinhaber: **Märkl, Herbert, Prof. Dr.-Ing.**
**21218 Seevetal (DE)**

(72) Erfinder: **Märkl, Herbert, Prof. Dr.-Ing.**
**21218 Seevetal (DE)**

(74) Vertreter: **Pohl, Manfred**
**Patentanwalt**
**Kirchenhang 32 b**
**21073 Hamburg (DE)**

(56) Entgegenhaltungen:
**EP-A- 0 139 976**   **EP-A- 0 493 727**
**WO-A-85/00584**   **US-A- 4 618 418**

- **AIVASIDIS ALEXANDER ET AL: "BIOMASSEABTRENNUNG IN DER ANAEROBEN ABWASSERREINIGUNG." GAS WASSERFACH WASSER ABWASSER FEB 1985, Bd. 126, Nr. 2, Februar 1985 (1985-02), Seiten 56-65, XP002173685**
- **MARKL H ET AL: "DER BIOGAS-TURMREAKTOR, EIN NEUES KONZEPT FUR DIE ANAEROBE ABWASSERREINIGUNG" CHEMIE. INGENIEUR. TECHNIK,DE,VERLAG CHEMIE GMBH. WEINHEIM, Bd. 66, Nr. 4, 1. April 1994 (1994-04-01), Seiten 534-536, XP000440225 ISSN: 0009-286X**

**Beschreibung**

Die Erfindung betrifft ein Verfahren zur Biomasse-Rückhaltung bei Bioreaktoren sowie eine Vorrichtung zur Durchführung des Verfahrens.

Bioreaktoren sind in verschiedenen Ausgestaltungen bekannt. Sie dienen zur Anzucht von Mikroorganismen, werden aber auch als Behältnis für biologische Stoffumwandlungen zu unterschiedlichen Zwecken eingesetzt. Beispielhaft sei hierfür ein aus der WO 85/00584 bekannter Bioreaktor genannt, bei dem organisch belastete Abfallsubstrate unter anaeroben Bedingungen vorgereinigt werden. Eine besondere Form eines Bioreaktors stellt der anaerobe Schlammbettreaktor dar, der auch als UASB-Reaktor bezeichnet wird (upstream anaerobic sludge blanket-reactor).

Anaerobe Schlammbettreaktoren werden unter anderem zur Abwasserbehandlung eingesetzt. Hierbei wird der Reaktor von unten nach oben mit Abwasser durchströmt, wobei sich im unteren Bereich des Reaktors ein Schlammbett mit hoher Bakterienkonzentration ausbildet. Am Kopf des Reaktors tritt das gereinigte Abwasser aus dem Reaktor aus. Dieser Ablauf sollte möglichst frei von Biomasse sein, da die Mikroorganismen unter anaeroben Bedingungen im allgemeinen langsam wachsen und bei zu kurzen hydraulischen Verweilzeiten leicht ausgeschwemmt werden können. Um hohe Umsatzgeschwindigkeiten erzielen zu können, muß daher darauf geachtet werden, daß möglichst wenig Biomasse mit dem gereinigten Abwasser aus dem Reaktor entfernt wird. Besonders schwierig ist diese Aufgabe bei platzsparend bauenden, hohen Biogasreaktoren, bei denen mit dem aufsteigenden Biogas auch Biomasse nach oben transportiert und ausgetragen wird.

Es sind bereits Biogasreaktoren bekannt geworden, bei denen durch entsprechende konstruktive Maßnahmen einem Verlust von Biomasse entgegengewirkt wird. Solche Reaktoren sind von Märkl beschrieben worden (Märkl, 1999, Modeling of Biogas Reactors, H.-J. Rehm und G. Reed (Herausgeber), Biotechnology, Volume IIa, VCH Verlagsgesellschaft, Weinheim, 527-560). Ein solcher Bioreaktor ist auch aus EP 0 640 059 B1 sowie der EP 0 493 727 A1 bekannt.

Die verschiedenen Biogasreaktoren nach dem Stand der Technik lösen jedoch das Problem der Biomasse-Ausschwemmung aus dem Reaktor nicht zufriedenstellend. Im Reaktorkopf entstehen immer wieder Turbulenzen, hervorgerufen durch aufsteigende Gasblasen, wodurch Biomasse mit in den Ablauf gelangt.

Aufgabe der vorliegenden Erfindung ist es daher, ein Verfahren zur Biomasse-Rückhaltung bei Bioreaktoren anzugeben, mit dem eine möglichst gute Sedimentation von Biomasse und damit ein möglichst biomassefreier Ablauf gewährleistet wird. Des weiteren ist es Aufgabe der vorliegenden Erfindung, eine Vorrichtung zur Durchführung eines solchen Verfahrens bereitzustellen.

Erfindungsgemäß erfolgt die Lösung der gestellten Aufgabe dadurch, daß man einen Feststoffabscheider, der mit Wasser aus dem Bioreaktor durchströmt wird, mit Druck überlagert und bei erhöhtem Druck eine Sedimentation der Biomasse vornimmt, wobei die mittlere Verweilzeit des den Feststoffabscheider durchströmenden Wassers kleiner oder gleich dem Verhältnis aus dem Speichervermögen des Wassers für Gase und der Gasproduktion durch die Biomasse im Feststoffabscheider ist.

Das erfindungsgemäße Verfahren beruht auf der Erkenntnis, daß insbesondere bei höherer Reaktorbelastung eine Abscheidung der Biomasse nur unzureichend gelingt, weil Gasblasen zum großen Teil erst im Bereich des Reaktorkopfes entstehen, da sich bei der Aufwärtsströmung des Abwassers der hydrostatische Druck verringert. Die Menge der selbst im oberen Bereich des Reaktors entstehenden Gasblasen reicht jedoch aus, um die gewünschte Sedimentation der Biomasse zu verhindern und wichtige Biomasse auszuschwemmen. Um diesem Auftreten von Gasblasen entgegenzuwirken, sieht das erfindungsgemäße Verfahren vor, den Ablauf des Bioreaktors mit Druck zu überlagern und bei erhöhtem Druck eine Sedimentation der Biomasse vorzunehmen. Gasblasen, die sich im oberen Bereich des Reaktors aufgrund des dort herrschenden niederen Drucks gebildet haben, gehen nach Erhöhung des Drucks wieder in Lösung. Die Biomasse-Suspension wird somit blasenfrei, und es entstehen günstige Bedingungen für die Sedimentation der Biomasse. Unter diesen Bedingungen wird die Sedimentation der Biomasse durch aufsteigende Gasblasen nicht mehr gestört.

Eine Druckerhöhung kann mittels einer Flüssigkeitspumpe vorgenommen, die beispielsweise zwischen dem Reaktorablauf und einem nachgeschalteten Abscheider angeordnet werden kann.

Das erfindungsgemäße Verfahren läßt sich vorzugsweise bei Anaerobreaktoren einsetzen. Es ist hierauf aber nicht beschränkt. Auch bei aeroben Prozessen, wie beispielsweise bei der aeroben Abwasserreinigung, kommt es darauf an, biologisch aktive Biomasse im System zu halten. Das erfindungsgemäße Verfahren ist besonders für tiefe Becken geeignet, die über eine entsprechende hydrostatische Höhendifferenz verfügen.

Zur Sedimentation der Biomasse eignen sich Feststoffabscheider, bei denen eine Sedimentation der Biomasse unter Ausnutzung der Schwerkraft erfolgt. Durch Drucküberlagerung eines solchen Feststoffabscheiders werden gebildete Gasblasen wieder gelöst, wodurch eine Behinderung der Sedimentation vermieden wird.

Überraschenderweise wurde gefunden, daß eine effektive Biomasse-Rückhaltung mit einem überstauten Feststoffabscheider möglich ist. Für die Realisierung dieser Lösung ist nur ein relativ geringer konstruktiver Aufwand erforderlich. Der Feststoffabscheider wird dem Bioreaktor nachgeschaltet, so daß der Ablauf des Bioreaktors in den Feststoffabscheider gelangt. Wird der Feststoffabscheider tiefer als der Reaktorablauf angeordnet, entsteht im Feststoffabscheider ein hydrostatischer Druck, der der Höhe der Wassersäule zwischen dem Reaktorablauf und dem Abscheider entspricht. Eine Flüssigkeitspumpe kann somit entfallen, gegebenenfalls aber noch zusätzlich vorgesehen werden.

Ein geeigneter Druck zur Drucküberlagerung des Ablaufes des Bioreaktors kann von besonderen Schlammeigenschaften abhängen und insbesondere bei der aeroben Abwasserreinigung zum Erreichen besserer Absetzeigenschaften von Fall zu Fall unterschiedlich sein. Unter Umständen wird man sich bei der Druckeinstellung auch an der Reaktorbelastung orientieren. Je höher diese ist, desto wichtiger wird es, den Druck für die Sedimentation der Biomasse zu steigern.

Nach einer bevorzugten Ausgestaltung der Erfindung befindet sich der Feststoffabscheider auf der Höhe des unteren Endes des Bioreaktors. Zur weiteren Erhöhung des hydrostatischen Druckes läßt sich der Feststoffabscheider aber auch auf eine noch tiefere Position absenken. Wird der Bioreaktor auf den Boden gestellt, kann der Feststoffabscheider beispielsweise in einem Bodenschacht versenkt sein.

Nach einer Ausgestaltung der Erfindung läßt sich die unter Druck sedimentierte Biomasse wieder in den Bioreaktor zurückführen. Bevorzugt wird diese Biomasse in den unteren Bereich des Bioreaktors zurückgeführt.

Weiterhin hat sich gezeigt, daß man die Sedimentation der Biomasse noch verbessern kann, wenn man diese bei niedrigerer Temperatur als der Temperatur im Bioreaktor durchführt. Dabei ist jedoch darauf zu achten, daß eine Temperaturabsenkung unter Umständen eine vorübergehende Inaktivierung der beteiligten Mikroorganismen bewirken kann. Die Höhe der Temperaturabsenkung ist daher dem biologischen System anzupassen.

Nach einer weiteren Ausgestaltung der Erfindung wird der Ablauf des Feststoffabscheiders auf die Höhe des Ablaufes des Bioreaktors zurückgeführt. Auf diese Weise läßt sich ohne weiteren technischen Aufwand, wie z.B. durch den Einbau von Drosselventilen, ein druckloser Ablauf erreichen.

In bevorzugter Weise ist das Lösungsvermögen des Wassers für Gase im Feststoffabscheider durchschnittlich mindestens 30 %, vorzugsweise mindestens 60 %, höher als das Lösungsvermögen des Wassers für Gase im Kopf des Bioreaktors. Dabei kommt es im wesentlichen auf das Gas Methan an, dessen Lösungsvermögen im Vergleich zu Kohlendioxid geringer ist.

Weitere Ausgestaltungen der Erfindung, insbesondere eine Vorrichtung zur Durchführung des erfindungsgemäßen Verfahrens werden nachfolgend anhand ausgewählter Beispiele näher erläutert.

Es zeigt:

Fig. 1       einen Biogasreaktor mit überstautem Feststoffabscheider in einer schematischen Seitenansicht,

Fig. 1a      einen Biogasreaktor mit überstautem Feststoffabscheider in einer schematischen Seitenansicht, wie er zur Durchführung eines Versuches nach Fig. 3 verwendet wurde,

Fig. 2       unterschiedliche Ausführungsformen eines Feststoffabscheiders, jeweils in schematischer Seitenansicht sowie

Fig. 3       Versuchsdiagramm: Entwicklung der Biomasse während einer Zeit von 600 Tagen in einem Biogasreaktor gemäß Fig. 1a.

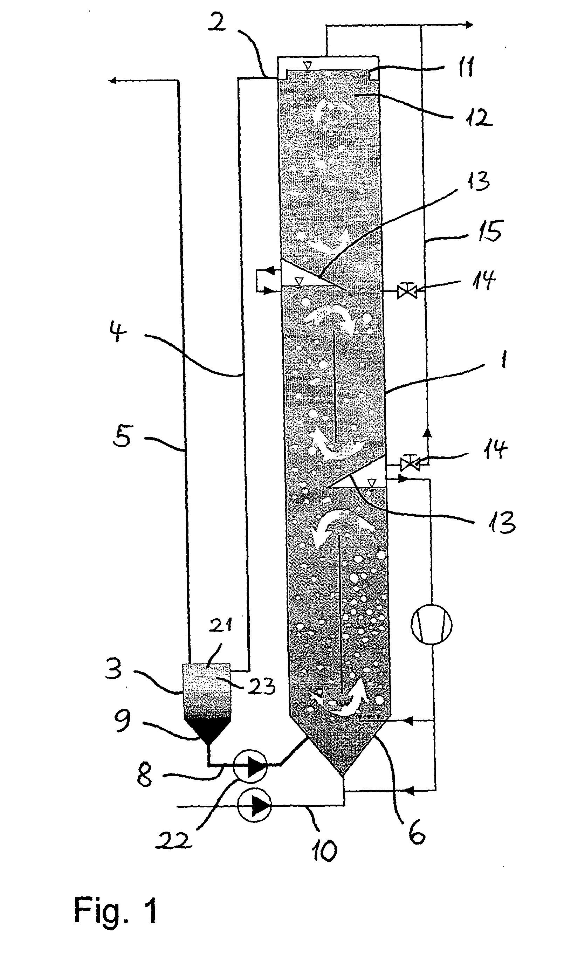

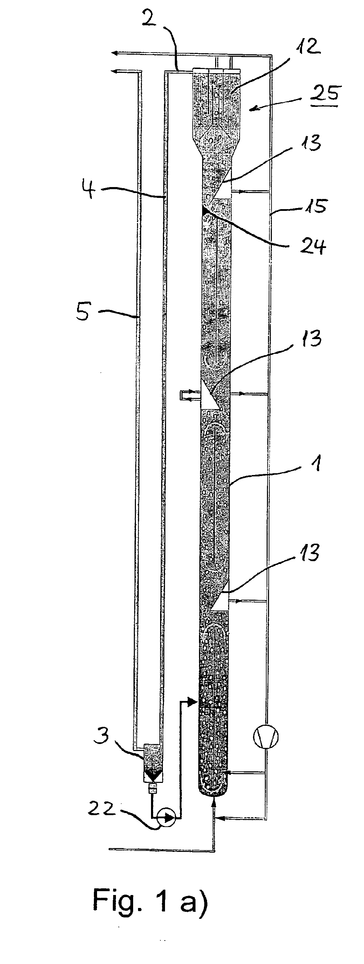

In Fig. 1 ist als besonderer Bioreaktor 1 ein Biogasreaktor dargestellt. Hierbei handelt es sich um eine turmartige Reaktorkonstruktion, der Abwasser über eine Leitung 10 am unteren Ende 6 des Bioreaktors zugeführt wird und den Bioreaktor 1 von unten nach oben durchströmt, wobei eine Reinigung des Abwassers stattfindet. Über einen Überlauf 11 am Kopf 12 des Bioreaktors 1 kann das (teil)gereinigte Wasser dann wieder abfließen. Beim anaeroben Abbau von organischen Stoffen im Abwasser entsteht hierbei Biogas, das überwiegend aus Methan und Kohlendioxid besteht. Zu geringen Anteilen können auch weitere Gase gebildet werden, wie beispielsweise Schwefelwasserstoff oder Ammoniak.

Um eine Gasakkumulation im oberen Bereich des Bioreaktors 1 zu vermeiden, sieht der Bioreaktor 1 nach Fig. 1 einzelne Gasauffangvorrichtungen 13 vor, die gebildetes Biogas abfangen, so daß das Biogas über Ventile 14 und eine Gassammelleitung 15 abgezogen werden kann.

Während bei Bioreaktoren nach dem Stand der Technik im Bereich des Reaktorkopfes 12 noch Gasblasen auftreten, die die Sedimentation der Biomasse erschweren, kann das Auftreten von Gasblasen im Feststoffabscheider 3 durch die vorliegende Erfindung deutlich reduziert werden. Der Bioreaktor 1 wird hierzu über eine Leitung 4 mit dem Feststoffabscheider 3 verbunden, über die der Ablauf 2 des Bioreaktors 1 in den Feststoffabscheider 3 gelangt. Die Leitung 4 führt zum oberen Ende 21 des Feststoffabscheiders, so daß der Ablauf 2 direkt in den Wirkungsbereich 23 des Feststoffabscheiders 3 geleitet wird.

Dabei ist der Feststoffabscheider 3 durch seine relative Lage zum Ablauf des Bioreaktors 1 überstaut. Bei diesem Druck geht gebildetes Biogas wieder in Lösung, so daß eine Sedimentation der Biomasse ungestört durch aufsteigende Gasblasen erfolgen kann. Der durch die Lösung des Biogases bewirkte Effekt auf die Sedimentation ist um so höher, je größer die Raumbelastung des Bioreaktors 1 ist. Wie experimentelle Daten ergeben haben, führt gerade eine hohe Raumbelastung zur vermehrten Biogasbildung und demzufolge zu einer Beeinträchtigung der Biomasse-Sedimentation unter sonst üblichen Bedingungen.

Mit dem Feststoffabscheider 3 ist eine weitere Leitung 5 verbunden, über die das gereinigte Wasser abfließen kann. Die Leitung 5 ist hierbei auf die Höhe des Ablaufs 2 zurückgeführt, um einen drucklosen Ablauf des gereinigten Wassers aus dem Gesamtsystem zu ermöglichen.

An die konstruktive Ausgestaltung des Feststoffabscheiders 3 sind im Grunde keine großen Anforderungen gestellt. Es ist jedoch darauf zu achten, daß der Abscheider nicht zu groß dimensioniert ist, da sonst aufgrund der großen Verweilzeit des Abwassers im Abscheider mit einer erneuten Bildung von Gasblasen zu rechnen ist, die die Abscheideleistung beeinträchtigen können.

Nach einer Ausgestaltung der Erfindung ist die Verweilzeit des Abwassers im nachgeschalteten Feststoffabscheider 3 so zu bemessen, daß das im Bereich des Feststoffabscheiders produzierte Biogas vollständig von der aufgrund des erhöhten hydrostatischen Drucks ebenfalls erhöhten Löslichkeit des Biogases ausgeglichen wird. Da das Lösungsvermögen von Wasser für $CO_2$ (22,5 mmol $L^{-1}$ $bar^{-1}$, bei 37,5 °C) wesentlich höher ist als das für Methan (1,1 mmol $L^{-1}$ $bar^{-1}$, bei 37,5 °C), muß im gegebenen Zusammenhang nur die Methanbildung betrachtet werden.

Im folgenden wird am Beispiel des für die beschriebenen Experimente eingesetzten Biogasreaktors 1 im Technikumsmaßstab (300 L) anhand der hier vorgetragenen Grundüberlegung das geeignete Abscheidevolumen ermittelt. Das Lösungsvermögen für Methan bei einem Biogas mit 60%-igem Methananteil am Reaktorkopf 12 beträgt

$$1{,}1 \text{ mmol } L^{-1} bar^{-1} \times 0{,}6 \text{ bar} \times 1{,}3 = 0{,}86 \text{ mmol } L^{-1}$$

wobei davon ausgegangen wird, daß die Lösung um etwa 30% (Faktor 1,3) übersättigt ist. Der entsprechende Wert im Feststoffabscheider beträgt

$$1{,}1 \text{ mmol } L^{-1} bar^{-1} \times 1{,}6 \text{ bar} \times 1{,}3 = 2{,}29 \text{ mmol } L^{-1}$$

Der Partialdruck von 1,6 bar ergibt sich aus der hydrostatischen Überstauung von 6 m und der Tatsache, daß hier anstelle von Biogas mit 60%-igem Methananteil von reinem Methan auszugehen ist, da das produzierte $CO_2$ vollständig geschluckt wird. Das Speichervermögen für Methan berechnet sich also aus der Differenz:

$$2{,}29 \text{ mmol } L^{-1} - 0{,}86 \text{ mmol } L^{-1} = 1{,}43 \text{ mmol } L^{-1}$$

Dieser Wert entspricht unter Normbedingungen einem Gasvolumen von 32 ml $L^{-1}$.

Geht man davon aus, daß mit einer Gasproduktion von 2 $l_{Biogas}$ $L^{-1}$ $d^{-1}$ bzw. 1,2 $l_{Methan}$ $L^{-1}$ $d^{-1}$ = 50 $ml_{Methan}$ $L^{-1}$ $h^{-1}$ zu rechnen ist, dann sollte im Feststoffabscheider 3 die mittlere Verweilzeit

$$32 \text{ ml } L^{-1} : 50 \text{ ml } L^{-1} h^{-1} = 0{,}64 \text{ h}$$

nicht überschritten werden. Bei einem durch den Feststoffabscheider geleiteten Volumenstrom von 150 L $d^{-1}$ (entspricht einer mittleren Verweilzeit im Bioreaktor 1 von 2 Tagen) = 6,7 L $h^{-1}$ erhält man ein rechnerisches Abscheidervolumen von

$$6{,}7 \text{ L } h^{-1} \times 0{,}64 \text{ h} = 4{,}29 \text{ L}$$

Da das Abscheidervolumen bei der gewählten Konstruktion nur zu einem Teil durchströmt wird, der andere Teil, der die abgeschiedene Biomasse enthält, hier jedoch nicht mitgerechnet werden darf, wurde für die Experimente das Abscheidervolumen von 6 L gewählt. Dieses hat sich während der durchgeführten Versuche bewährt. Flotation von Biomasse aufgrund von Gasblasenbildung wurde nicht beobachtet.

Es sei im übrigen noch darauf hingewiesen, daß es günstig ist, den nachgeschalteten Feststoffabscheider 3 sowie die Leitung 4 thermisch nicht gegen die Umgebung zu isolieren. Einmal verringert sich bei einer Abkühlung des Abwassers die Biogasproduktion in diesem Bereich und zum anderen verbessert sich das Vermögen der Flüssigkeit, Methan zu speichern. Eine Temperaturerniedrigung von 37 °C auf 32 °C erhöht die Löslichkeit für Methan immerhin um 0,1 mmol $L^{-1}$ $bar^{-1}$. Aufgrund dieser Tatsache enthält der oben angegebene Wert für das Abscheidervolumen von 6 L noch gewisse Sicherheitsreserven.

Wie das Rechenbeispiel ebenfalls gezeigt hat, wird die Leistung des Feststoffabscheiders um so besser, je größer der Höhenunterschied zwischen Reaktorkopf und der Lage des Feststoffabscheiders ist, da sich mit der Höhendifferenz das Speichervermögen der Flüssigkeit für Methan erhöht. Andererseits haben sowohl die Beispielrechnung als auch die Experimente gezeigt, daß bereits ein Höhenunterschied von nur 6 m schon eine erstaunlich gute Leistung des Abscheiders im Hinblick auf einen Rückhalt der Biomasse ergibt.

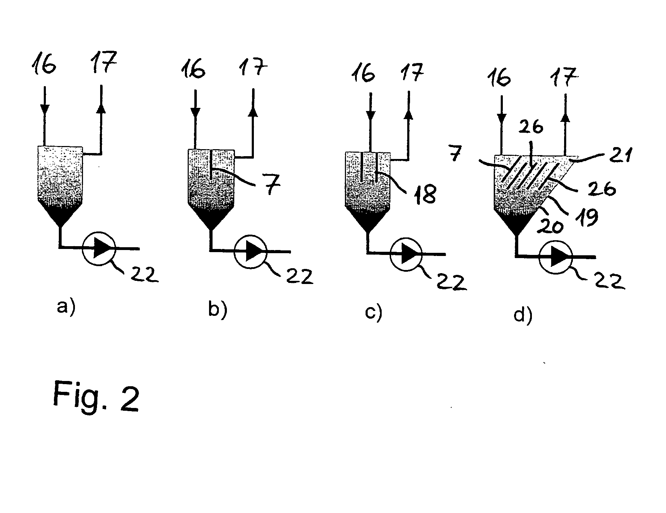

Bevorzugte Ausführungsformen des Feststoffabscheiders 3 sind in Fig. 2 dargestellt. Die einfachste Form ist im Querschnitt zylindrisch oder rechteckig und weist keine zusätzlichen Einbauten auf (Fig. 2a). Diese Ausführungsform gewährleistet auch trotz des kleinen Abscheidervolumens (1/50 des Volumens des Bioreaktors 1) eine gute Funktion. In dem unten beschriebenen Versuchsbeispiel wurde die zylindrische Variante eingesetzt, weil sich diese leicht aus einem Rohr herstellen läßt.

Vorteile gegenüber der in Fig. 2a dargestellten Bauart ergeben sich bei der Verwendung eines Trennelements 7 (Fig. 2b), da hier der Kurzschluß zwischen Zulauf 16 und Ablauf 17 unterbrochen wird.

Die Ausführungsform gemäß Fig. 2c zeigt eine zylindrische Bauart mit einem Einleitrohr 18, wodurch ebenfalls ein Kurzschluß zwischen Zulauf 16 und Ablauf 17 verhindert wird.

In Fig. 2d ist schließlich noch eine besondere Ausführungsform eines Feststoffabscheiders 3 mit mehreren Trennlamellen 26 dargestellt. Die einzelnen Trennlamellen 26 sind parallel zueinander angeordnet, wobei ein Trennelement 7 den unerwünschten Kurzschluß zwischen Zulauf 16 und Ablauf 17 verhindert. Darüber hinaus ist der Trichterwand 19 auf der Seite 20 des Ablaufs 17 bis zum oberen Ende 21 des Feststoffabscheiders 3 verlängert. Der Feststoffabscheider 3 gemäß Fig. 2d dürfte von den gezeigten Ausführungsformen die beste Abscheideleistung besitzen. Es ist jedoch zu beachten, daß es grundsätzlich günstig ist, möglichst wenig Flächen in den Abscheider zu integrieren, da sich auf diesen Flächen Mikroorganismen ansiedeln können, die zur unerwünschten Gasblasenbildung führen. Um dennoch den Vorteil des Lamellenabscheiders zu nutzen, können die Trennlamellen 26 mit einer Mikroorganismen abweisenden Oberfläche versehen sein. Hierzu können glatte Materialien oder entsprechende Antihaftbeschichtungen verwendet werden, wie sie im allgemeinen bekannt sind.

Versuchsbeispiel

Die Versuche wurden im Technikumsmaßstab gemäß Fig. la mit einem Bioreaktor 1 mit nachgeschaltetem Feststoffabscheider 3 durchgeführt, dessen grundsätzlicher Aufbau dem in Fig. 1 entspricht. Das Reaktorvolumen betrug 300 L, der innere Reaktordurchmesser 0,225 m, die Höhe 5,8 m. Der Apparat war aus doppelwandigen zylindrischen Glaselementen aufgebaut. Der Doppelmantel diente der Thermostatisierung der Anlage auf 37 °C. Als Wärmeträger diente Wasser, das über einen Thermostaten auf der gewünschten Temperatur gehalten wurde. Zur Temperaturmessung wurden vier Pt-100-Widerstände über die Reaktorhöhe verteilt. Versuche wurden mit der Anlage ohne und mit nachgeschaltetem Feststoffabscheider 3 durchgeführt. Der hydrostatische Druck im Bereich des Feststoffabscheiders 3 betrug ca. 0,6 bar.

Auf dem Weg vom Kopf 12 des Bioreaktors 1 zum nachgeschalteten Feststoffabscheider 3 erhöhte sich der hydrostatische Druck. Gasblasen, die sich im oberen Bereich des Bioeaktors aufgrund des dort herrschenden niederen Drucks gebildet haben, gingen nach Erhöhung des Drucks wieder in Lösung. Die Suspension war somit völlig blasenfrei, und es bestanden günstige Bedingungen für die Sedimentation der Biomasse. Die Biomasse setzte sich großenteils ab und wurde über eine Pumpe 22 von Zeit zu Zeit dem Bioreaktor 1 wieder zugeführt.

Der Bioreaktor 1 wurde mit Biomasse aus einem Biogasreaktor der städtischen Kläranlage Hamburg gestartet und mit zuckerhaltigem Nährmedium versorgt. Das zugeführte Substrat enthielt Saccharose 60 g/L, KOH 2,5 g/L, NaOH 2,5 g/L sowie Spurenelemente nach Dubach (Dubach A. (1987): Anaerobe Vergärung von Fructose mit methanogenen Mischkulturen. Dissertation Zürich). Das Substrat wurde einem Vorratsbehälter entnommen, in dem bereits eine gewisse Versäuerung stattgefunden hatte.

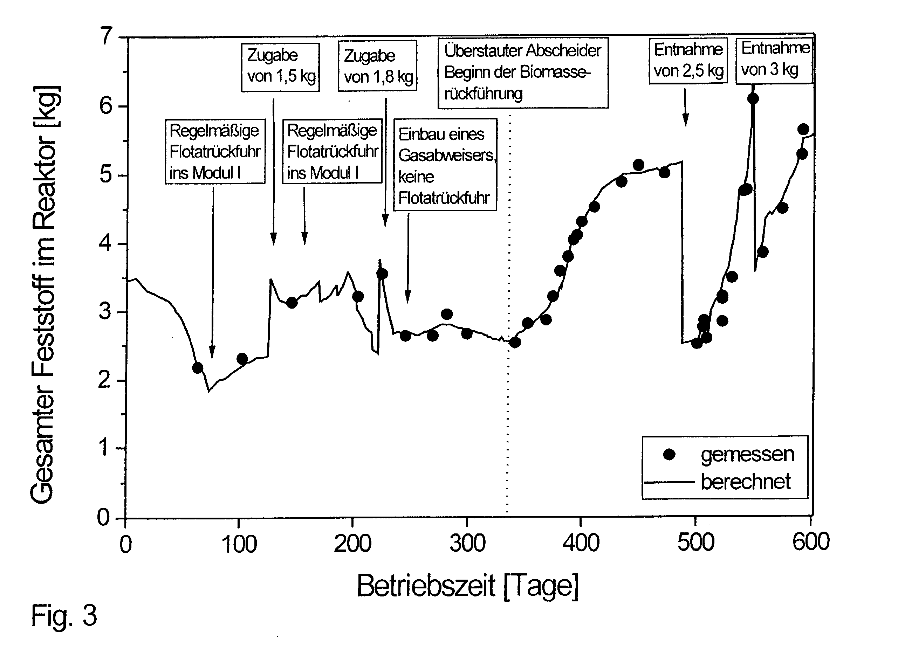

Das Ergebnis der Experimente, die über einen Zeitraum von 600 Tagen durchgeführt wurden, ist in Fig. 3 dargestellt. Aufgetragen ist der gesamte experimentell ermittelte Feststoff im Reaktor. Auf der Abszisse ist die Versuchszeit dargestellt. Während der ersten 335 Tage wurde die Anlage ohne Feststoffabscheider 3, in der restlichen Zeit mit dem überstauten Feststoffabscheider 3 betrieben.

Während der gesamten Versuchszeit wurde der Reaktor unterschiedlich belastet. Die für den Reaktor ermittelten hydraulischen Verweilzeiten bewegten sich im Bereich zwischen 1 und 7,5 Tagen. Beim Betrieb ohne nachgeschalteten Feststoffabscheider 3 wurde die Biomasse nach und nach aus dem Reaktor ausgetragen. Um den Biomassepegel nicht unter einen kritischen Wert von ca. 2,5 kg absinken zu lassen, wurde in Abständen biomassehaltiges Flotat zugegeben. Dieses Flotat wurde aus dem Ablauf des Reaktors gewonnen. Zusätzlich wurde neue Animpfbiomasse zu zwei verschiedenen Zeiten, einmal 1,5 kg und einmal 1,8 kg zugeführt. Nach einer Versuchszeit von ca. 250 Tagen wurde ein Gasabweiser 24 in den Bioreaktor 1 eingebaut, der aufsteigende Gasblasen zur Gasauffangvorrichtung 13 leiten sollte. Die aufsteigenden Gasblasen sollten auf diese Weise nicht in den Kopf 12 des Bioreaktors 1 gelangen.

Wie die Ergebnisse zeigen, war eine Stabilisation von Biomasse auf niedrigem Niveau möglich, ein Zuwachs von Biomasse ergab sich allerdings nicht.

Nach einer Betriebszeit von ca. 335 Tagen wurde schließlich die Anlage mit einem überstauten Feststoffabscheider 3 betrieben. Es ergab sich unmittelbar danach eine deutliche Zunahme der Biomasse, so daß in gewissen Abständen, um eine zu hohe Akkumulation von Biomasse zu vermeiden, Biomasse aus dem Reaktorfuß entnommen werden mußte. Insgesamt ermöglichte der Einsatz des nachgeschalteten Feststoffabscheiders 3 einen sicheren und problemlosen Betrieb des Bioreaktors 1 auch bei hoher Belastung.

Weitere Untersuchungen ergaben, daß die Biomasse, die sich im Reaktorkopf 12 befand, eine mittlere Partikelgröße von 0,2 mm, diejenige im unteren Bereich des Bioreaktors 1 eine mittlere Partikelgröße von 2 mm aufwies. Während die Konzentration der Biomasse im Reaktorkopf 12 nur wenige g/L betrug, stellte sich im unteren Reaktormodul eine Feststoffkonzentration im Bereich von 20 g/L ein. Interessanterweise ergaben gesonderte Messungen außerhalb der Versuchsanlage, daß die Biomasse im Reaktorkopf 12 im Vergleich zu derjenigen Biomasse, die sich im unteren Teil des Bioreaktors 1 befand, eine höhere spezifische Aktivität aufwies. Da bei Betrieb mit nachgeschaltetem Feststoffabscheider 3 die besonders aktive Biomasse aus dem Reaktorkopf 12 angereichert wurde und ein Abzug von Überschuß-Biomasse aus dem Reaktorfuß erfolgte, verschob sich das Biomassespektrum hin zu einer höheren spezifischen Aktivität. Dem letztgenannten Effekt dürfte es im wesentlichen zuzuschreiben sein, daß der Bioreaktor nach Fig. la mit nachgeschaltetem und überstautem Feststoffabscheider 3 eine Gasproduktion von 20 L Biogas pro L Reaktorvolumen und Tag ermöglichte.

Nach den erhaltenen Ergebnissen besitzt eine bevorzugte Vorrichtung zur Durchführung des erfindungsgemäßen Verfahrens eine Reaktorhöhe von 6-30 m, wobei der Bioreaktor 1 einen Durchmesser von 2-4 m besitzt. Wegen der hohen Abscheidekapazität eines nachgeschalteten und überstauten Feststoffabscheiders 3 scheint es möglich, auf einen aufwendigen Sedimenter 25 im Reaktorkopf 12 zu verzichten. Hierdurch ergibt sich eine insgesamt kostengünstige Bauweise.

Bezugszeichenliste

| | |
|---|---|
| 1 | Bioreaktor |
| 2 | Ablauf |
| 3 | Feststoffabscheider |
| 4 | Leitung |
| 5 | Ablaufleitung |
| 6 | Ende |
| 7 | Trennelement |
| 8 | Leitung |
| 9 | Biomasse |
| 10 | Leitung |
| 11 | Überlauf |
| 12 | Kopf |
| 13 | Gasauffangvorrichtung |
| 14 | Ventil |
| 15 | Gassammelleitung |
| 16 | Zulauf |
| 17 | Ablauf |
| 18 | Einleitrohr |
| 19 | Trichterwand |
| 20 | Seite |
| 21 | Ende |
| 22 | Pumpe |
| 23 | Wirkungsbereich |
| 24 | Gasabweiser |
| 25 | Sedimenter |
| 26 | Trennlamelle |

**Patentansprüche**

1. Verfahren zur Biomasse-Rückhaltung bei Bioreaktoren, insbesondere bei anaeroben Schlammbettreaktoren, wobei man einen Feststoffabscheider, der mit Wasser aus dem Bioreaktor durchströmt wird, mit Druck überlagert und bei dem erhöhten Druck eine Sedimentation der Biomasse vornimmt,
   **dadurch gekennzeichnet,**
   **daß** die mittlere Verweilzeit des den Feststoffabscheider durchströmenden Wassers kleiner oder gleich dem Verhältnis aus dem Speichervermögen des Wassers für Gase und der Gasproduktion durch die Biomasse im Feststoffabscheider ist.

2. Verfahren nach Anspruch 1,
   **dadurch gekennzeichnet,**
   **daß** man die Sedimentation der Biomasse mittels eines überstauten Feststoffabscheiders durchführt.

3. Verfahren nach Anspruch 1 oder 2,
   **dadurch gekennzeichnet,**
   **daß** man den Feststoffabscheider auf der Höhe des unteren Endes des Bioreaktors anordnet.

4. Verfahren nach einem der Ansprüche 1 bis 3,
   **dadurch gekennzeichnet,**
   **daß** man den Feststoffabscheider zur Erhöhung des hydrostatischen Druckes in einen Bodenschacht versenkt anordnet.

5. Verfahren nach einem der Ansprüche 1 bis 4,
   **dadurch gekennzeichnet,**
   **daß** man die Sedimentation der Biomasse bei niedrigerer Temperatur als der Temperatur im Bioreaktor durchführt.

6. Verfahren nach einem der Ansprüche 2 bis 5,
   **dadurch gekennzeichnet,**
   **daß** der Ablauf des Feststoffabscheiders auf die Höhe des Ablaufes des Bioreaktors zurückgeführt wird.

7. Verfahren nach einem der Ansprüche 1 bis 6,
   **dadurch gekennzeichnet,**
   **daß** das Lösungsvermögen des Wassers für Gase im Feststoffabscheider durchschnittlich mindestens 30 %, vorzugsweise mindestens 60 %, höher ist als das Lösungsvermögen des Wassers für Gase im Kopf des Bioreaktors.

8. Verfahren nach einem der Ansprüche 1 bis 7,
   **dadurch gekennzeichnet,**
   **daß** nach erfolgter Sedimentation der Biomasse eine Biomasse-Rückführung in den Bioreaktor erfolgt.

9. Verfahren nach einem der Ansprüche 1 bis 8,
   **dadurch gekennzeichnet,**
   **daß** die Biomasse in den unteren Bereich des Bioreaktors zurückgeführt wird.

**Claims**

1. Process for retaining biomass in bioreactors, in particular in anaerobic sludge blanket reactors, wherein a solids separator, which has water from the bioreactor flowing through it, is pressurized and a sedimentation of the biomass is carried out under the elevated pressure,
   **characterized in that**
   the mean residence time of the water flowing through the solids separator is less then or equal to the ratio of the gas holding capacity of the water to the gas production by the biomass in the solids separator.

2. Process according to claim 1,
   **characterized in that**
   the sedimentation of the biomass is carried out by means of a flooded solids separator.

3. Process according to claim 1 or 2,
**characterized in that**
the solids separator is disposed at the level of the lower end of the bioreactor.

4. Process according to one of the claims 1 to 3,
**characterized in that**
the solids separator is disposed in a recessed manner in an underground chamber in order to elevate the hydrostatic pressure.

5. Process according to one of the claims 1 to 4,
**characterized in that**
the sedimentation of the biomass is carried out at a lower temperature than the temperature in the bioreactor.

6. Process according to one of the claims 2 to 5,
**characterized in that**
the discharge of the solids separator is returned at the level of the discharge of the bioreactor.

7. Process according to one of the claims 1 to 6,
**characterized in that**
the capacity of the water to dissolve gases in the solids separator is on average at least 30 %, preferably at least 60 % higher than the capacity of the water to dissolve gases in the head of the bioreactor.

8. Process according to one of the claims 1 to 7,
**characterized in that**
after completion of the biomass sedimentation, biomass is returned to the bioreactor.

9. Process according to one of the claims 1 to 8,
**characterized in that**
the biomass is returned to the lower region of the bioreactor.


**Revendications**

1. Procédé de retenue de biomasse dans des bioréacteurs, notamment des réacteurs anaérobies à lit de boue, dans lequel on sollicite par pression un séparateur de matière solide dans lequel passe de l'eau du bioréacteur et on procède sous pression accrue à une sédimentation de la biomasse,
**caractérisé en ce que**
le temps de séjour moyen de l'eau passant dans le séparateur de matière solide est inférieur ou égal au rapport entre la capacité d'accumulation de l'eau pour les gaz et la production de gaz par la biomasse dans le séparateur de matière solide.

2. Procédé selon la revendication 1,
**caractérisé en ce que**
on réalise la sédimentation de la biomasse au moyen d'un séparateur de matière solide saturé.

3. Procédé selon la revendication 1 ou 2,
**caractérisé en ce que**
on dispose le séparateur de matière solide à la hauteur de l'extrémité inférieure du bioréacteur.

4. Procédé selon une des revendications 1 à 3,
**caractérisé en ce que**
on descend le séparateur de matière solide dans un puits dans le sol pour augmenter la pression hydrostatique.

5. Procédé selon une des revendications 1 à 4,
**caractérisé en ce que**
on réalise la sédimentation de la biomasse à une température plus basse que la température à l'intérieur du bioréacteur.

6. Procédé selon une des revendications 2 à 5,
   **caractérisé en ce que**
   l'évacuation du séparateur de matière solide est ramenée à la hauteur de l'évacuation du bioréacteur.

7. Procédé selon une des revendications 1 à 6,
   **caractérisé en ce que**
   la capacité de dissolution de l'eau pour les gaz dans le séparateur de matière solide est en moyenne d'au moins 30 %, de préférence au moins 60 %, supérieure à la capacité de dissolution de l'eau pour les gaz dans la tête du bioréacteur.

8. Procédé selon une des revendications 1 à 7,
   **caractérisé en ce que**,
   une fois que la sédimentation de la biomasse est faite, il y a un renvoi de la biomasse dans le bioréacteur.

9. Procédé selon une des revendications 1 à 8,
   **caractérisé en ce que**
   la biomasse est renvoyée dans la zone inférieure du bioréacteur.

Fig. 1

Fig. 1 a)

Fig. 2

Fig. 3

EP 1 134 194 B1